# EUROPÄISCHE PATENTSCHRIFT

(11) **EP 1 444 170 B1**
(45) Veröffentlichungstag und Bekanntmachung des Hinweises auf die Patenterteilung: **18.03.2009**
(21) Anmeldenummer: 02803749.7
(22) Anmeldetag: 22.11.2002
(51) Int. Cl.: C02F 3/10, H02N 11/00, C04B 35/46

(54) **MIKROBIOLOGISCHE ENERGIEQUELLE ZUM ANTRIEB EINES VERBRAUCHERS**
MICROBIOLOGICAL ENERGY SOURCE FOR OPERATING A CONSUMER
SOURCE D'ENERGIE MICROBIOLOGIQUE POUR ENTRAINER UN CONSOMMATEUR

(30) Priorität: 23.11.2001 DE 10157191
(43) Veröffentlichungstag der Anmeldung: 11.08.2004
(73) Patentinhaber: Georg Fritzmeier GmbH + Co. KG, 85655 Grosshelfendorf (DE)
(72) Erfinder: UPHOFF, Christian, 83229 Aschau im Chiemgau (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2002/004295
(87) Internationale Veröffentlichungsnummer: WO 2003/045848

(56) Entgegenhaltungen:
- EP-A- 0 210 493
- DE-A- 4 345 148
- DE-A- 10 118 839
- DE-A- 19 514 931
- US-A- 4 987 068
- US-A- 5 464 539
- PATENT ABSTRACTS OF JAPAN vol. 1997, no. 08, 29. August 1997 (1997-08-29) & JP 09 099291 A (GOLD KOSAN KK), 15. April 1997 (1997-04-15)
- JUNG J ET AL: "ENCHANCEMENT OF PHENOL BIODEGRADATION BY SOUTH MAGNETIC FIELD EXPOSURE" JOURNAL OF CHEMICAL TECHNOLOGY AND BIOTECHNOLOGY. (INTERNATIONAL JOURNAL OF BIOTECHNICAL AND CHEMICAL PROCESSES), ELSEVIER APPLIED SCIENCE PUBLISHERS. BARKING, GB, Bd. 70, Nr. 3, 1. November 1997 (1997-11-01), Seiten 299-303, XP000750797 ISSN: 0268-2575

## Beschreibung

Die Erfindung betrifft eine mikrobiologische Energiequelle zum Antrieb eines Verbrauchers, beispielsweise eines Elektromotors.

Auf dem Gebiet der Abwasserreinigung ist man bereits seit langer Zeit bemüht, die biologischen Vorgänge der -Selbstreinigung in Gewässern unter natürlichen Bedingungen in zeitlich und räumlich begrenzte Reaktionen innerhalb von- Abwasseraufbereitungsanlagen umzusetzen, so dass der Reinigungsprozess wesentlich schneller als auf natürlichem Wege und mit einem möglichst geringen Reaktorvolumen ablaufen kann. Ein wesentlicher Aspekt ist dabei die Verwendung und Konzentration der Mikroorganismen, die zum Abbau und zum Aufschluss der unerwünschten Bestandteile des Abwassers verwendet werden.

In der Patentanmeldung DE 100 62 812 der Anmelderin wird eine mikrobiotische Mischkultur zur Behandlung von verunreinigtem Abwasser vorgeschlagen, bei der ein Anteil an photosynthetisch arbeitenden Mikroorganismen und ein Anteil an Leuchtbakterien enthalten ist. Problemtisch bei dieser bereits erfolgreich eingesetzten Mischkultur ist, dass ein gewisser Mindestanteil an Leuchtbakterien vorhanden sein muss, um das in dieser Anmeldung beschriebene Wechselspiel zwischen photosynthetisch arbeitenden Mikroorganismen und den Leuchtbakterien einzuleiten. Zur Verbesserung des Wachstums der Microorganismen wird in der weiteren nachveröffentlichten Patentanmeldung DE 101 18 839 vorgeschlagen, die für die Reinigung von beladenem Abwasser vorgesehenen Mikroorganismen in einem Bioreaktor mit hochfrequenten Schwingungen zu beaufschlagen. Diese Schwingungen liegen im Ultraschallbereich und es konnte festgestellt werden, dass auch bei Frequenzen im Bereich von 40 kHz eine Wachstumsstimulation von den Bioreaktor durchströmenden Mikroorganismen festzustellen ist. Bei der bekannten Lösung wird als Bioreaktor eine Füllkörperschüttung verwendet, wobei die Schüttung aus permanentmagnetischen und piezoelektrischen Füllkörpern besteht, die vorzugsweise aus Keramikmaterialien hergestellt sind.

Die Druckschrift US 4,987,068 offenbart Füllkörper für einen Bioreaktor, die aus einem kugelformigen, anorganischen Material bestenen und in ihrem Inneren durchgehende, nach außen offene Poren aufweisen, in denen sich Mikrosganismen immobilisieren.

Insbesondere in der Abwasseraufbereitungstechnik ist man bemüht, die bei der Abwasserreinigung anfallenden Produkte energetisch umzusetzen, um den Energiebedarf der Gesamtanlage minimal zu halten. So wird beispielsweise das bei der mikrobiologischen Umsetzung der bei der Abwasserreinigung anfallenden Feststoffe entstehende Biogas genutzt, um energieintensive Prozesse, beispielsweise eine Verbrennung energetisch unterstützen, so dass möglichst wenig Fremdenergie zugeführt werden muss.

Dem gegerüber liegt der Erfingung die Aufgabe zugrunde, bei der biologischen Abwasser oder Abfallaufbereitung Wechselwirkungen zwischen den abzubauenden oder umzusetzenden Produkt und den Mikroorganismen energetisch auszunutzen.

Diese Erindung wird durch eine mikrobiologische Energiequelle mit den Merkmalen des Patentanspruchs 1 gelöst.

Erfindungsgemäßhat die Energiequelle einen Bioreaktor, der mit zumindest einem piezoelektrisch kugelförmigen Fullkörper versehen ist und der eine Mischung aus anionischen und kationischen Mikroorganismen, die einen Anteil an photosynthetisch arbeitenden und einen Anteil an lichtemittierenden Mikroorganismen aufweist, enthält, die beim Durchströmen des Bioreaktors und des daraus resultierenden mikorobiologischen Abbau am Füllkörper einen elektrischen Plus- und Minuspol bilden, so dass Strom zum Betrieb des elektrischen Verbrauchers über den Biochluss abgreifbar ist. Dieser elektrische Verbraucher kann beispielsweise ein Antrieb für ein bei der Abwasseraufbereitung benötigtes Arbeitsgerät sein.

Unter anionischen und kationischen Mikroorganismen versteht man dabei Mikroorganismen die sich aufgrund physikochemischer Reaktionen während des Stoffwechsels sich in bevorzugten Potenzialbereichen aufhalten und sich somit im Bereich von Minus- bzw. Pluspolen ansammeln. Die über dem Füllkörper entstehende Spannung kann dann zum Antrieb eines elektrischen Verbrauchers ausgenutzt werden.

Erfindungsgemäß ist im Bioreaktor eine Füllkörper-Schüttung aufgenommen ist, wobei sich an den Füllkörpern jeweils ein Plus- und ein Minuspol durch entsprechende Orientierung der Mikroorganismen ausbildet und sich diese einzelnen "Dipole" dann so ausrichten, dass über dem Bioreaktor ein gerichtetes dentisches Feld entsteht.

Erfindungsgemäß ist jeder der einen "Dipol" ausbildenden Füllkörper kugelförmig ausgebildet und mit einer keramischen Beschichtung versehen, die an swei gegenüberliegenden Polen unterbrechen ist. Bei dieser Variante wird es bevorzugt, wenn die Beschichtung aus Titanoxid besteht. Zusätzlich zu der "Dipole" bildenden Schüttung kann im Bioreaktor noch eine Schüttung aus Permanentmagneten vorgesehen werden. Diese Permanentmagneten erzeugen ein Magnetfeld, das bestimmte Mikroorganismen wie beispielsweise Einzeller, Geiseltierchen etc. zum Wachstum anregt und somit die biologische Umsetzung verbessert.

Bei einem bevorzugten Ausführungsbeispiel werden diese Permanentmagneten zylinderförmig ausgebildet, so dass die Turbulenz des in den Bioreaktor einströmenden Mediums, beispielsweise des mit Organik beladenen Abwassers verbessert wird.

Die einen "Dipol" bildenden Füllkörper und die permanentmagnetischen Füllkörper sind vorzugsweise nicht als feste Schüttung im Bioreakter ausgenommen, sondern die Packung ist derart ausgeführt, dass die einzelnen Füllkörper relativ zueinander bewegbar sind. Es wird vermutet, dass durch diese Relativbeweglichkeit der Füllkörper eine Ausrichtung der "Dipole" ermöglicht wird.

Der Wirkungsgrad der mikrobiologischen Energiequelle lässt sich weiter erhöhen, wenn der mikrobiologischen Mischung wasserstoffproduzierende Mikroorganismen, beispielsweise Bakterien zugemischt werden, so dass bei dem biologischen Abbau bzw. der Umsetzung der Organik Waserstoff entsteht, der aus dem Reaktor abgeführt und energetisch genutzt werden kann. Dabei wird es bevorzugt, wenn der Wasserstoff über eine Membran führbar ist, die einen Wandungsabschnitt des Bioreaktors ausbildet.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 eine schematische Ansicht eines erfindungsgemäßen Bioreaktors zur Ausbildung einer mikrobiologischen Energiequelle;
Figur 2 einen Füllkörper des Bioreaktors aus Figur 1 und Figur 3 einen Schnitt eines Kopfteils des Bioreaktors aus Figur 1.

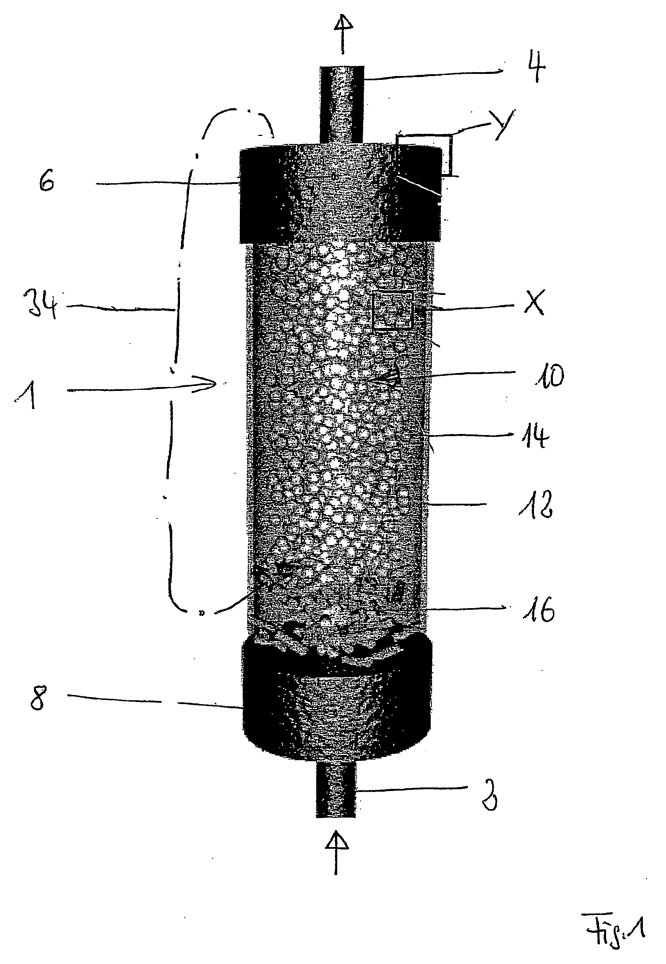

Figur 1 zeigt einen Bioreaktor 1, der von mit Organik beladenem Abwasser durchströmt wird. Dieses tritt über einen Zulauf 2 in den als etwa zylinderförmige Kolonne ausgebildeten Bioraktor 1 und verlässt diesen über einen zentralen Ablauf 4. Der Bioreaktor 1 hat des weiteren ein Kopfteil 6 und ein Bodenteil 8, mit denen ein eine Schüttung 10 aufnehmender Zylinder 12 des Bioreaktors 1 stirnseitig verschlossen und in denen der Zulauf 2 bzw. der Ablauf 4 ausgebildet ist. Im Bioreaktor 1 sind desweiteren noch bestimmte Mikroorganismen vorhanden, auf die im folgenden eingegangen wird.

Bei dem in Figur 1 dargestellten Ausführungsbeispiel besteht die Schüttung 12 aus einem oben liegenden Schüttungsabschnitt mit piezoelektrischen Füllkörpern 14 und einem weiteren, stromaufwärts liegenden Abschnitt, der aus etwa zylinderförmigen Permanentmagneten 16 gebildet ist. Die beiden Schüttungen aus Füllkörpern 14 und Permanentmagneten 16 sind jedoch nicht als Festbett ausgebildet sondern derart, dass eine gewisse Relativbeweglichkeit der Füllkörper 14 und Permanentmagneten 16 innerhalb des jeweiligen Abschnittes ermöglicht ist. D. h., die Schüttung ist sehr lose gepackt.

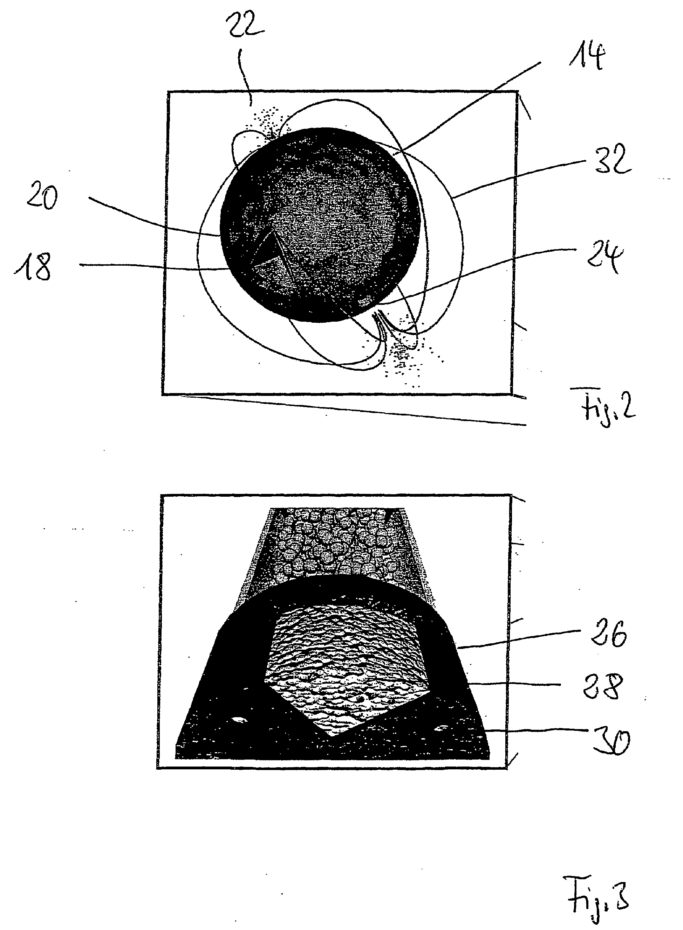

Figur 2 zeigt eine vergrößerte Darstellung eines im Bereich X aufgenommenen piezoelektrischen Füllkörpers 14.

Demgemäß ist der Füllkörper 14 etwa kugelförmig ausgebildet und hat einen Kern 18 aus einem Keramikmaterial mit piezoelektrischen Eigenschaften. An der Oberfläche dieses Materials entstehen bei einer Verformung der Kernmatrix unter Einwirkung mechanischer Kraft (Druck, Zug, Torsion) elektrische Ladungen oder umgekehrt, beim Anlegen einer elektrischen Spannung können mechanische Verformungen des Keramikmaterials festgestellt werden, die beispielsweise in der Mikrotechnik zur Steuerung von Bauelementen oder in der Druckertechnik zum Ausstoßen von Tinte ausgenutzt werden können.

Auf diesem Kern 18 aus Piezokeramik ist eine Beschichtung 20 aus Titanoxid (TiO₂) aufgebracht. Die Schichtdicke liegt vorzugsweise im Bereich zwischen 200 bis 1000mn - selbstverständlich sind auch andere Schichtdicken einsetzbar. Diese Beschichtung 20 wirkt als Schutzmantel, so dass toxische Bestandteile der Piezokeramik, wie beispielsweis Blei nicht in Wechselwirkung mit dem Abwasser gelangen.

Wie desweiteren in Figur 2 angedeutet ist, wird der Füllkörper 14 nach dem Aufbringen der Beschichtung 20 an zwei diametral zueinander angeordneten Bereichen gepunktet - d. h., die Beschichtung wird in diesen Bereichen 22, 24 punktförmig unterbrochen, so dass der Kern 8 in diesen punktförmigen Abschnitten Kontakt mit dem Abwasser hat. Diese Kontaktbereiche sind jedoch sehr klein ausgeführt, so dass keine das Abwasser belastende Wechselwirkungen mit der Piezokeramik auftreten können.

Figur 3 zeigt ein Detail Y des in Figur 1 dargestellten Kopfteils 6. Demgemäß hat dieses Kopfteil einen Aussenmantel 26 der eine Membran 28 umgreift. Diese kann beispielsweise aus Keramikmaterial hergestellt sein und hat eine aktive Porenweite, die es erlaubt, dass Wasserstoff (H₂) durch die Membran 28 hindurch über Austrittsöffnungen 30 aus dem Bioreaktor 1 abgeführt werden können. Die Porenweite der Membran 28 ist jedoch zu gering, um Abwasser oder sonstige Inhaltsstoffe des Abwassers oder Mikroorganismen durch die Austrittsöffnungen 30 austreten zu lassen.

Durch diese Ausgestaltung des Bioreaktors 1 wird es ermöglicht, dass das Abwasser über den Ablauf 4 abgezogen wird, während bei der im folgenden noch näher beschriebenen biologischen Umsetzung entstehender Wasserstoff über die Membran 28 einer weiteren Verwendung zugeführt werden kann.

Wie bereits eingangs erwähnt, befindet sich in dem Bioreaktor 1oder in dem eintretenden Abwasser eine biologische Mischkultur mit einer vorgegebenen Zusammensetzung. Einzelheiten dieser biologischen Mischkultur sind in der Anmeldung DE 100 62 812 beschrieben, auf die hiermit verwiesen sei. Zum besseren Verständnis werden nur die wesentlichen Bestandteile der Mischkultur erläutert. Diese enthält einen Anteil an photosynthetisch arbeitenden Mikroorganismen und einen Anteil an Leuchtbakterien oder ähnlich wirkenden, lichtemittierenden Mikroorganismen, die in einer breitbandigen biologischen Lösung gelöst sind und dem Abwasser zugefügt werden. Das in der vorgenannten Patentanmeldung beschriebene Wechselspiel zwischen den photosynthetisch arbeitenden Mikroorganismen und den Leuchtbakterien führt dazu, dass die photosynthetisch arbeitenden Bakterien durch die Leuchtbakterien zur Photosynthese angeregt werden. Die Mikroorganismen betreiben die photosynthesemit Schwefelwasserstoff und Wasser als Edukt und setten Schwefel bzw. Sauerstoff frei. Ferner kennen sie Stickstoff sowie Phosphat binden und organische sowie anorganische Materie abbauen. Der Mischung sind des weiteren Mikroorganismen zugefügt,die während der mikrobiologischen Umsetzung Wasserstoff bilden.

In der zugeführten mikrobiologischen Zusammensetzung werden photosynthetisch arbeitende Mikroorganismen, die fakultativ phototroph sind, verwendet*.* Fakultativ phototroph bedeutet, dass die Mikroorganismen sowohl unter anaeroben Bedingungen im Licht als auch unter aeroben im Dunklen wachsen können.

Zu den Photosynthesebakterien gehören gramnegative aerobe stabförmige und kreisförmige Bakterien sowie grampositive kreisförmige Bakterien. Diese können Erdosporen aufweisen oder ohne Sporen vorhanden sein. Dazu zählen beispielsweise auch grampositive Aktinomyceten und verwandte Bakterien.

In diesem Zusammenhang können auch stickstoffbindende Organismen genannt werden. Dazu gehören beispielsweise Algen, wie Anabena Nostoc in Symbiose mit Azola. Des weiteren können Aktinomyceten, z. B. Frankia in Symbiose mit Erlen und Bakterien, wie Rhizobium in Symbiose mit Leguminosen, erwähnt werden.

Außerdem können auch aerobe Algen, Azotobacter, methanoxidierende Bakterien und Schwefelhakterien verwendet werden, Dazu zählen auch grüne Schwefelbakterien und braun grüne Photosynthesebakterien. Hier können, auch nicht violette Schwefelhakterien und violette Schwefelbakterien genannt werden.

Es ist bevorzugt, dass in der erfindungsgemäßen mikrobiologischen Zusammensetzung als fakultativ phototrophe Mikroorganismen, Prochlorophyten, Cyanobakterien, grüne Schwefelbakterien, Purpurbakterien, Chloroflexus-ähnliche Formen und Heliobkterium und Heliobacillus-ähnliche - Formen enthalten sind. Die vorgenannten fakultativ phototrophen Mikroorgansimen können auch als Mischungen aus zwei oder mehr davon vorliegen. In einer ganz besonderen Ausführungsform liegen alle sechs genannten Mikroorgansimen als Mischung vor.

Das Licht, das die Photosynthese antreibt, stammt von den Leuchtbakterien, die als zweite essentielle Komponente in der mikrobiologischen Zusammensetzung der vorliegenden Erfindung enthalten sind. Diese Leuchtbakterien besitzen eine Leuchtkraft, d.h. sie sind in der Lage, Lichtquanten auszusenden. Es handelt sich hierbei um ein System, das enzymatisch abläuft. Als Beispiel kann hier das Luciferin-Luciferase-System genannt werden.

In einer bevorzugten Ausführungsform sind in der erfindungsgemäßen Mischung als Leuchtbakterien Photobacterium phosphoreum, Vibrio fischeri, Vibrio harveyi, Pseudomonas lucifera oder Beneckea enthalten. Es ist auch möglich, eine Mischung aus mindestens zwei daraus zu wählen.

Zur Optimierung der erfindungsgemäßen mikrobiologischen Zusammensetzung können weitere Bestandteile darin enthalten sein. Vorzugsweise sind solche Nebenbestandteile Pflanzenextrakte, Enzyme, Spurenelemente, Polysaccharide, Alginderivate, andere Mikroorganismen wie oben. Die Nebenbestandteile können einzeln oder in Kombination in der erfindungsgemäßen mikrobiologischen Zusammensetzung vorliegen. Die Pflanzenextrakte können beispielsweise Spitzwegerich enthalten.

Eventuell hinzugefügte Milchsäurebakterien dienen dazu, um pathogene Keime zu unterdrücken und den pH-Wert abzusenken.

Als Nährlösung für die erfindungsgemäße mikrobiologische Zusammensetzung wird im allgemeinen eine Lösung verwendet, die dazu beiträgt, dass die darin enthaltenen Bestandteile, insbesondere die Mikroorganismen, ohne weiteres darin leben können. Dabei kommt es insbesondere darauf an, dass die Wechselwirkung der Photosynthesebakterien und der Leuchtbakterien vollständig zum Tragen kommt. Es hat sich erwiesen, dass eine biologische Nährlösung mit Melasse, insbesondere Rohzuckermelasse oder Zuckerrübenmelasse als Hauptbestandteil geeignet ist.

Die photosynthetisch arbeitenden Mikroorganismen und die Leuchtbakterien liegen in der erfindungsgemäßen mikrobiologischen Zusammensetzung normalerweise in einem Verhältnis von 1 :10 bis 1 : 500 vor. Ein bevorzugtes Verhältnis ist 1 : 100.

Bei der Durchströmung des Bioreaktors 1 mit dem Organik enthaltenden Abwasser lagern sich die Mikroorganismen bevorzugt an der Oberfläche der piezoelektrischen Füllkörper 14 ab. Es zeigte sich, da vermutlich durch die von den Leuchtbakterien abgegebene Strahlung die Titanoxidbeschichtung derart aktiviert wird, dass sich die Oberflächenspannung der die piezoelektrischen Füllkörper 14 umgebenden Substanz verringert und diese sich gleichmäßig über die Oberfläche des Füllkörpers verteilen.

Es entsteht eine Art den Füllkörper 14 umgebender Biofilm, der im wesentlichen aus einer schleimartigen extracellulären polymeren Substanz (EPS) besteht, in der die Mikroorganismen eingebettet sind. Diese EPS verhindert ein Vordringen toxischer Substanzen im Abwasser (beispielsweise Schwermetalle) in das Zellinnere der Mikroorganismen. Die EPS wirkt des weiteren als Diffusionsbarriere, die ein ausdiffundieren von bei der biologischen Umsetzung benötigten Stoffen, wie beispielsweise Exoenzymen verhindert. Die EPS wirkt wie eine semipermeable Membran, die den Abbau der im Abwasser gelösten Organik unterstützt. Je nach Art der Mikroorganismen setzen sich diese bevorzugt im Bereich der Bereiche 22 oder 24 ab. Des weiteren verwenden Bakterien die in Symbiose mit anderen Arten leben, die EPS als Mittel, um in räumlicher Nähe zu diesen Bakterien bleiben zu können.

Aufgrund der verringerten Oberflächenspannung dieses Biofilms können sich auf der Oberfläche der Füllkörper praktisch keine im Abwasser enthaltenen Verunreinigungen ansetzen, da diese von dem Biofilm unterspült werden und dieser mit großer Adhäsionskraft an der Titanoxidschicht abgelagert ist.

Bei Einsatz der von der Anmelderin entwickelten Mischkultur sammeln sich im Biofilm Leuchtbakterien und photosynthetisch wirksame Bakterien an, so daß eine Art "Leuchtfilm" entsteht, der die piezokeramischen Füllkörper 14 umgibt.

Es zeigte sich, dass sich in einem Bereich 22 bevorzugt Mikroorganismen anlagern, die Elektronen aus den Reduktionsäquivalenten ihrer Substrate gewinnen und auf andere Empfänger übertragen während sich am anderen Bereich 24 bevorzugt Mikroorganismen anlagern, die für den Stoffwechesel Inhaltsstoffe des Abwassers, beispielsweise molekularen Wasserstoff als Elektronenquelle reduzieren. D. h., es entstehen in den Bereichen 22 und 24 je nach Art des angelagerten Mikroorganismus ein Plus- und ein Minuspol, so dass praktisch jeder piezoelektrische Füllkörper 14 für sich eine Art "Dipol" darstellt. Die Feldlinien 32 dieses Mikrosystems sind in Figur 2 eingezeichnet, wobei die Wolke über den Bereichen 22, 24 die Mikroorganismen darstellt.

Es zeigte sich überraschenderweise, dass sich bei geeigneter Packung der Schüttung 10 die einzelnen piezoelektrischen Füllkörper 14 bei Umströmung mit Abwasser derart ausrichten, dass die Feldlinien im wesentlichen parallel zueinander laufen. Es stellt sich gemäß Figur 1 ein Feld ein, dessen Feldlinien 34 etwa den in Figur 1 dargestellten Verlauf haben. Demgemäß entsteht entlang des Bioreaktors 1 aufgrund der Ausrichtung der Füllkörper 14 ein Pluspol und ein Minuspol, so dass eine Spannung abgreifbar ist. Das entstehende Feld ist gemäß Messungen der Anmelderin derart stark, dass genügend Leistung vorhanden ist, um einen Elektromotor anzutreiben. D. h., dass die während der biologischen Umsetzung der organik des Abwassers über den Bioreaktor 1 entstehende Spannung zum Antrieb eines elektrischen Verbrauchers, beispielsweise eines Elektromotors verwendet werden kann. Bei Abwasserreinigungsanlagen ist es dann besonders vorteilhaft wenn diese Energie genutzt wird, um Rührer, Rechen, Förderorgane oder sonstige Apparate der Abwasserreinigungsanlage zu betreiben.

Die im unteren oder oberen Teil der Schüttung angeordneten Permanentmagneten 16 sorgen zum einen dafür, dass auf grund ihrer scharfkantigen Ausgestaltung eine turbulente Strömung innerhalb des Bioreaktors 1 vorliegt, des weiteren werden durch dieses permanentmagnetische Feld bestimmte Mikroorganismen zum Wachstum zusätzlich angelegt.

Wie bereits vorstehend erwähnt, werden einige Mikroorganismen eingesetzt, die gasförmigen Wasserstoff als Zwischen- oder Endprodukt bilden. Derartiger Wasserstoff entsteht beispielsweise bei der Photokatalyse, wobei Sulfat (SO₄²-) reduziert und Wasserstoff und Schwefel freigesetzt wird. Dieser gasförmige Wasserstoff kann durch die Membran 28 und die Austrittsöffnungen 30 hindurch aus dem Bioreaktor 1 austreten und wird durch eine geeignete Abführeinrichtung abgeführt und energetisch genutzt. So ist es beispielsweise möglich, diesen im Bioreaktor 1 gewonnen Wasserstoff in einer Brennstoffzelle energetisch zu verwerten.

Der vorbeschriebene Bioreaktor lässt sich somit zweifach nutzen, wobei entstehende Gase und auch ein entstehendes Kraftfeld zur Erzeugung elektrischer oder mechanischer Energie ausgenutzt werden.

Offenbart ist eine mikrobiologische Energiequelle zum Antrieb eines elektrischen oder mechanischen Verbrauchers, wobei in einem Bioreaktor zumindest ein piezoelektrisch oder ähnlich wirkender Füllkörper aufgenommen ist. Dieser Bioreaktor wird mit Abwasser durchströmt, und enthält eine Mischung von Mikroorganismen, die aufgrund des mikrobiologischen Abbaus von im Abwasser enthaltener Organik im Bioreaktor einen Plus- und einen Minuspol der Energiequelle bilden.
- 1: Bioreaktor
- 2: Zulauf
- 4: Ablauf
- 6: Kopfteil
- 8: Bodenteil
- 10: Schüttung
- 12: Zylinder
- 14: piezoelektrischer Füllkörper
- 16: Permanentmagnet
- 18: Kern
- 20: Beschichtung
- 22: gepunkteter Bereich
- 24: gepunkteter Bereich
- 26: Aussenmantel
- 28: Membran
- 30: Austrittsöffnung
- 32: Feldlinien

## Patentansprüche

1. Mikrobiologische Energiequelle zum Antrieb eines Verbrauchers, vorzugsweise eines Elektromotors, **gekennzeichnet, durch** einen Bioreaktor, der eine lose gepackte Schüttung aus relativ zueinander beweglichen Kugelförmigen Füllkörpern und eine Mischung aus amonischen und kationischen Mikroorganismen, die einen Anteil an photosynthetisch arbeitenden und einen Anteil an lichtemittierenden Mikroorganismen aufweist, aufweist, wobei die Füllkörper einen piezoelektrischen Kern aufweisen und mit einer Beschichtung versehen sind, die an zwei einander gegenüberliegenden Bereichen unterbrochen ist, an denen sich die Mirkoorganismen anlagern, wobei sich die anionischen Mikroorganismen bevorzugt in dem einem Bereich und die kationischen Mikroorganismen bevorzugt in dem anderen Bereich anlagern, so dass sich aufgrund des **durch** die Mikroorganismen bereitgestellten Abbaus von im Wasser enthaltener Organik und der bevorzugten Anlagerung der Mikroorganismen an dem einen Bereich ein Pluspol und an dem anderen Bereich ein Minuspol ausbildet, über den Bioreaktor eine zum Antrieb des Verbrauchers abgreifbare Spannung ausbildet.

2. Energiequelle nach Patentanspruch 1, wobei die Beschichtung (20) Titanoxid enthält.

3. Energiequelle nach einem der vorhergehenden Patentansprüche, wobei im Bioreaktor (1) eine Schüttung aus Permanentmagneten (16) vorgesehen ist.

4. Energiequelle nach Patentanspruch 3, wobei die Permanentmagneten (16) zylinderförmig ausgebildet sind.

5. Energiequelle nach einem der vorhergehenden Patentansprüche, mit einer Einrichtung zum Abführen von bei der biologischen Umsetzung entstandenem Wasserstoff.

6. Energiequelle nach Patentanspruch 5, wobei der Wasserstoff über eine Membran (28) abführbar ist, die einen Wandungsabschnitt des Bioreaktors 1 ausbildet.

7. Energiequelle nach Patentanspruch 5 oder 6, wobei Mikroorganismen vorhanden sind, die bei der biologischen Umsetzung der Organik des Abwassers Wasserstoff als Zwischen- oder Endprodukt bilden.

## Claims

1. A microbiological energy source for driving a consumer, preferably an electric motor, **characterized by** a bioreactor (1) including a bulk material of filling bodies (14), which have a spherical shape and are movable relative to each other, and a mixture of anionic and cationic microorganisms, wherein the mixture comprises a part photosynthetically operating microorganisms and a part of light emitting microorganisms, and wherein the filling bodies have a piezoelectric core (14) and are provided with a coating (20) that is interrupted in two opposite regions (22, 24), at which said microorganisms accumulate, wherein the anionic microorganisms preferably accumulate in one of the two regions and the cationic microorganisms preferably accumulate in the other region, so that, due to the microbiological decomposition of organic matter contained in waste water and the preferred accumulation of the microorganisms, a positive pole is created at the one region and a negative pole is created at the other region, whereby a potential difference along the bioreactor is created, so that a voltage may be drawn for operation of a working tool.

2. The energy source in accordance with claim 1, wherein said coating (20) contains titanium oxide.

3. The energy source in accordance with any one of the preceding claims, wherein a bulk material of permanent magnets (16) is provided in said bioreactor (1).

4. The energy source in accordance with claim 3, wherein said permanent magnets (16) have a cylindrical shape.

5. The energy source in accordance with any one of the preceding claims, including means for withdrawing hydrogen formed during biological conversion.

6. The energy source in accordance with claim 5, wherein the hydrogen may be withdrawn across a membrane (28) forming a wall section of said bioreactor (1).

7. The energy source in accordance with claim 5 or 6, wherein micro-organisms are present that form hydrogen as an intermediate or final product in the biological conversion of the organic matter of the waste water.

## Revendications

1. Source d'énergie microbiologique pour entraîner un récepteur, de préférence un moteur électrique, **caractérisée par** un bioréacteur qui présente un lit compacté en vrac, composé de charges sphériques, mobiles les unes par rapport aux autres, et d'un mélange de micro-organismes anioniques et cationiques qui présente une part de micro-organismes opérant par photosynthèse et une part de micro-organismes émettant de la lumière, les charges présentant un noyau piézoélectrique et étant munies d'un revêtement qui est discontinu au niveau de deux zones opposées l'une à l'autre, où les micro-organismes viennent se fixer, les micro-organismes anioniques se fixant de préférence dans ladite une zone et les micro-organismes cationiques se fixant de préférence dans ladite autre zone, de sorte qu'en raison de la décomposition des organismes contenus dans l'eau, assurée par les micro-organismes, et en raison de la fixation préférée des micro-organismes, un pôle positif est réalisé au niveau de ladite une zone, et un pôle négatif est réalisé au niveau de ladite autre zone, par lequel une tension pouvant être prélevée pour entraîner le récepteur est réalisée par l'intermédiaire du bioréacteur.

2. Source d'énergie selon la revendication 1, dans laquelle le revêtement (20) comprend de l'oxyde de titane.

3. Source d'énergie selon l'une quelconque des revendications précédentes, dans laquelle un lit d'aimants permanents (16) est prévu dans le bioréacteur (1).

4. Source d'énergie selon la revendication 3, dans laquelle les aimants permanents (16) sont réalisés de façon cylindrique.

5. Source d'énergie selon l'une quelconque des revendications précédentes, comprenant un dispositif pour évacuer de l'hydrogène créé par la transformation biologique.

6. Source d'énergie selon la revendication 5, dans laquelle l'hydrogène peut être évacué par l'intermédiaire d'une membrane (28) qui réalise une portion de paroi du bioréacteur (1).

7. Source d'énergie selon la revendication 5 ou 6, dans laquelle des micro-organismes sont présents qui forment, lors de la transformation biologique des organismes des eaux résiduaires, de l'hydrogène comme produit intermédiaire ou produit final.
